# EUROPEAN PATENT APPLICATION

(11) **EP 2 937 626 A1**
(43) Date of publication of application: **28.10.2015**
(21) Application number: 15164107.3
(22) Date of filing: 17.04.2015
(51) Int. Cl.: F21V 8/00, H04N 13/04

(54) **BACKLIGHT DEVICE AND THREE-DIMENSIONAL DISPLAY APPARATUS HAVING THE SAME**

(30) Priority: 23.04.2014 KR 20140048470
(71) Applicant: Samsung Electronics Co., Ltd, Gyeonggi-do 443-742 (KR)
(72) Inventor: Jeon, Keun Bae, Gyeonggi-do (KR); Minami, Masaru, Gyeonggi-do (KR); Lee, Won Yong, Gyeonggi-do (KR)
(74) Representative: Appleyard Lees

(57) **Abstract**

Provided is a backlight device in which each of a plurality of patterns separated at a uniform interval is intermittently formed and a 3D display apparatus having the same. The backlight device includes light sources configured to generate light and a light guide plate configured to change a path of the light and configured to emit the light, wherein the light guide plate includes an incident surface upon which the light is incident, an exit surface configured to emit the incident light, a reflective surface provided opposite to the exit surface, and a plurality of main patterns separated at a uniform interval, the plurality of main patterns provided intermittently on the reflective surface and configured to scatter the incident light.

## Description

### BACKGROUND

### 1. Field

Apparatuses consistent with exemplary embodiments relate to a backlight device emitting light to a display panel displaying a three-dimensional (3D) image and a 3D display apparatus including the same.

### 2. Description of the Related Art

In the related art, binocular disparity of a viewer is used to generate a three-dimensional (3D) image. As methods for generating 3D images using binocular disparity, there are a stereoscopic method and an autostereoscopic method.

In the stereoscopic method, a viewer wears glasses to display a 3D image, such as polarized glasses or LC shutter glasses. Such a stereoscopic method is mainly applied at places where many people view 3D images using a polarized projector, such as in a movie theater. In the autostereoscopic method, a viewer observes an image with the naked eye using a device, such as a lenticular lens, a parallax barrier, or parallax illumination. Such an autostereoscopic method is applied to displays for games, a home TV, a display for exhibition, etc., which are used by individuals or a small number of people.

Among the autostereoscopic method, if a parallax barrier is used, patterns separated at uniform intervals may be formed on a light guide plate (LGP). Light scattered by the patterns penetrates a display panel and thus, the display panel may generate a 3D image.

### SUMMARY

One or more exemplary embodiments provide a backlight device in which each of a plurality of patterns separated at uniform intervals is discontinuously formed and a three-dimensional (3D) display apparatus having the same.

Additional aspects of the inventive concepts will be set forth in part in the description which follows and, in part, will be obvious from the description, or may be learned by practice of the invention.

In accordance with an aspect of an exemplary embodiment, there is provided a backlight device including light sources generating light and a light guide plate changing the path of the generated light and then emitting the light, wherein the light guide plate includes at least one incident surface upon which the light is incident, an exit surface emitting the incident light, a reflective surface positioned opposite the exit surface, and a plurality of main patterns separated at uniform intervals and discontinuously formed on the reflective surface so as to scatter the incident light.

Each of the plurality of main patterns may include a plurality of sub-pattern groups classified according to distances from the at least one incident surface.

The plurality of sub-pattern groups may be different.

Each of the plurality of sub-pattern groups may include a plurality of sub-patterns separated at uniform intervals.

The intervals between the plurality of sub-patterns may vary according to the sub-pattern groups to which the plurality of sub-patterns belongs.

The intervals between the plurality of sub-patterns may decrease as the distances between the sub-pattern groups to which the plurality of sub-patterns belongs and the at least one incident surface increase.

The widths of the plurality of sub-patterns may vary according to the sub-pattern groups to which the plurality of sub-patterns belongs.

The widths of the plurality of sub-patterns may increase as the distances between the sub-pattern groups to which the plurality of sub-patterns belongs and the at least one incident surface increase.

Each of the plurality of sub-patterns may be formed in a direction of extending the at least one incident surface.

Each of the plurality of sub-patterns may be discontinuously formed.

The plurality of sub-patterns may include at least one of triangular prism patterns, round prism patterns, and lenticular patterns.

If the at least one incident surface includes a plurality of incident surfaces, each of the plurality of main patterns may include a plurality of sub-pattern groups classified according to the shortest distance among distances from the plurality of incident surfaces.

The plurality of main patterns may be inclined at a predetermined angle from the at least one incident surface.

In accordance with an aspect of another exemplary embodiment, there is provided a 3D display apparatus including light sources generating light, a light guide plate changing the path of the generated light and then emitting the light, and a display panel transmitting the light emitted from the light guide plate and displaying a left eye image recognized by a user's left eye and a right eye image recognized by a user's eight eye so that the user may recognize a 3D image, wherein the light guide plate includes at least one incident surface upon which the light is incident, an exit surface emitting the incident light, a reflective surface positioned opposite the exit surface, and a plurality of main patterns separated at uniform intervals and discontinuously formed on the reflective surface so as to scatter the incident light.

Each of the plurality of main patterns may include a plurality of sub-pattern groups classified according to distances from the at least one incident surface.

The plurality of sub-pattern groups may be different.

Each of the plurality of sub-pattern groups may include a plurality of sub-patterns separated at uniform intervals.

The intervals between the plurality of sub-patterns may vary according to the sub-pattern groups to which the plurality of sub-patterns belongs.

The intervals between the plurality of sub-patterns may decrease as the distances between the sub-pattern groups to which the plurality of sub-patterns belongs and the at least one incident surface increase.

The widths of the plurality of sub-patterns may vary according to the sub-pattern groups to which the plurality of sub-patterns belongs.

The widths of the plurality of sub-patterns may increase as the distances between the sub-pattern groups to which the plurality of sub-patterns belongs and the at least one incident surface increase.

Each of the plurality of sub-patterns may be formed in a direction of extending the at least one incident surface.

Each of the plurality of sub-patterns may be discontinuously formed.

The plurality of sub-patterns may include at least one of triangular prism patterns, round prism patterns, and lenticular patterns.

If the at least one incident surface includes a plurality of incident surfaces, each of the plurality of main patterns may include a plurality of sub-pattern groups classified according to the shortest distance among distances from the plurality of incident surfaces.

The plurality of main patterns may be inclined at a predetermined angle from the at least one incident surface.

In accordance with an aspect of another exemplary embodiment, there is provided a backlight device including: a light source configured to generate light; and a light guide plate configured to change a path of the light and configured to emit the light, wherein the light guide plate includes: an incident surface upon which the light is incident; an exit surface configured to emit the incident light; a reflective surface provided opposite to the exit surface; and a plurality of main patterns separated at a uniform interval, the plurality of main patterns provided intermittently on the reflective surface and configured to scatter the incident light.

Each of the plurality of main patterns may include a plurality of sub-pattern groups, each sub-pattern group having a scattering density according to a distance from the incident surface to each sub-pattern group.

Each of the plurality of sub-pattern groups may be configured to have different scattering density from one another.

Each of the plurality of sub-pattern groups may include a plurality of sub-patterns separated at a uniform interval.

The interval of the plurality of sub-patterns may vary according to a position of the each sub-pattern group.

The interval of the plurality of sub-patterns may vary according to the position of the each sub-pattern group with respect to the incident surface.

The interval the plurality of sub-patterns may decrease as a distance between each sub-pattern group and the incident surface increases.

A width of a sub-pattern of the plurality of sub-patterns may vary according to a position of the each sub-pattern group.

The width of the sub-pattern of the plurality of sub-patterns may vary according to the position of the each sub-pattern group with respect to the incident surface.

The width of the sub-pattern of the plurality of sub-patterns may increase as a distance between each sub-pattern group and the incident surface increases.

Each of the plurality of sub-patterns may extend in a parallel direction with an extending direction of the incident surface.

Each of the plurality of sub-patterns may be intermittently formed.

The plurality of sub-patterns may include at least one of a triangular prism pattern, a curvilinear prism pattern, and a lenticular pattern.

If the incident surface includes a plurality of incident surfaces, each of the plurality of main patterns may include a plurality of sub-pattern groups, each sub-pattern group having a density according to a distance between each sub-pattern group and a closest incident surface of the plurality of incident surfaces.

The plurality of main patterns may be inclined at a predetermined angle with respect to the incident surface.

The plurality of sub-pattern groups of a main pattern of the plurality of main patterns may be continuously connected with one another.

Each of the plurality of main patterns may be intermittently provided on the reflective surface from one another.

In accordance with an aspect of another exemplary embodiment, there is provided a 3D display apparatus including: a light source configured to generate light; a light guide plate configured to change a path of the light and configured to emit the light; and a display panel configured to transmit the light emitted from the light guide plate and configured to display a first image recognized by a user's first eye and a second image recognized by a user's second eye, wherein the light guide plate includes: an incident surface upon which the light is incident; an exit surface configured to emit the incident light; a reflective surface provided opposite to the exit surface; and a plurality of main patterns separated at uniform intervals, the plurality of main patterns discontinuously provided on the reflective surface and configured to scatter the incident light.

In accordance with an aspect of another exemplary embodiment, there is provided a backlight device including: a light source configured to generate light; and a light guide plate configured to emit the light including: an incident surface upon which the light is incident; an exit surface extending perpendicularly from the incident surface and configured to emit the incident light; a reflective surface provided opposite to the exit surface and comprising a plurality of main patterns provided intermittently and configured to scatter the incident light, wherein the plurality of main scattering patterns are configured to variably scatter the incident light from an end portion of the light guide plate to a middle portion of the light guide plate.

The plurality of scattering main patterns may be configured to increasingly scatter an amount of the incident light from the end portion of the light guide plate to the middle portion of the light guide plate.

In accordance with an aspect of another exemplary embodiment, there is provided a 3D display apparatus including: a light source configured to generate light; a light guide plate configured to emit the light; and a display panel configured to transmit the light emitted from the light guide plate and configured to display a first image recognized by a user's first eye and a second image recognized by a user's second eye, wherein the light guide plate includes: an incident surface upon which the light is incident; an exit surface extending perpendicularly from the incident surface and configured to emit the incident light; a reflective surface provided opposite to the exit surface and comprising a plurality of main scattering patterns provided intermittently and configured to scatter the incident light, and wherein the plurality of main scattering patterns are configured to variably scatter the incident light from an end portion of the light guide plate to a middle portion of the light guide plate.

The plurality of scattering main patterns may be configured to increasingly scatter an amount of the incident light from the end portion of the light guide plate to the middle portion of the light guide plate.

### BRIEF DESCRIPTION OF THE DRAWINGS

The above and/or other aspects of the disclosure will become apparent and more readily appreciated from the following description of exemplary embodiments, taken in conjunction with the accompanying drawings of which:
FIG. 1 is a perspective view illustrating an external appearance of a three-dimensional (3D) display apparatus in accordance with an exemplary embodiment;
FIG. 2 is a view illustrating a configuration of the 3D display apparatus in accordance with an exemplary embodiment;
FIG. 3 is a view illustrating a configuration and operation of a backlight device in accordance with an exemplary embodiment;
FIG. 4 is a plan view of a light guide plate of a backlight device in accordance with an exemplary embodiment;
FIGS. 5A to 5C are views illustrating a method of forming main patterns in a backlight device in accordance with an exemplary embodiment;
FIGS. 6A to 6C are views illustrating a method of forming main patterns in a backlight device in accordance with an exemplary embodiment;
FIGS. 7A to 7C are views illustrating a method of forming main patterns in a backlight device in accordance with an exemplary embodiment;
FIG. 8 is a view illustrating a configuration and operation of a backlight device in accordance with an exemplary embodiment;
FIG. 9 is a plan view of a light guide plate of a backlight device in accordance with an exemplary embodiment;
FIGS. 10A to 10C are views illustrating a method of forming main patterns in a backlight device in accordance with an exemplary embodiment;
FIGS. 11A to 11C are views illustrating a method of forming main patterns in a backlight device in accordance with an exemplary embodiment;
FIGS. 12A to 12C are views illustrating a method of forming main patterns in a backlight device in accordance with an exemplary embodiment;
FIGS. 13A to 13C are sectional views of various sub-patterns of a backlight device in accordance with exemplary embodiments; and
FIG. 14 is a view illustrating a method of providing a 3D image to a user in a 3D display apparatus in accordance with an exemplary embodiment.

### DETAILED DESCRIPTION

Reference will now be made in detail to the exemplary embodiments, examples of which are illustrated in the accompanying drawings, wherein like reference numerals refer to like elements throughout.

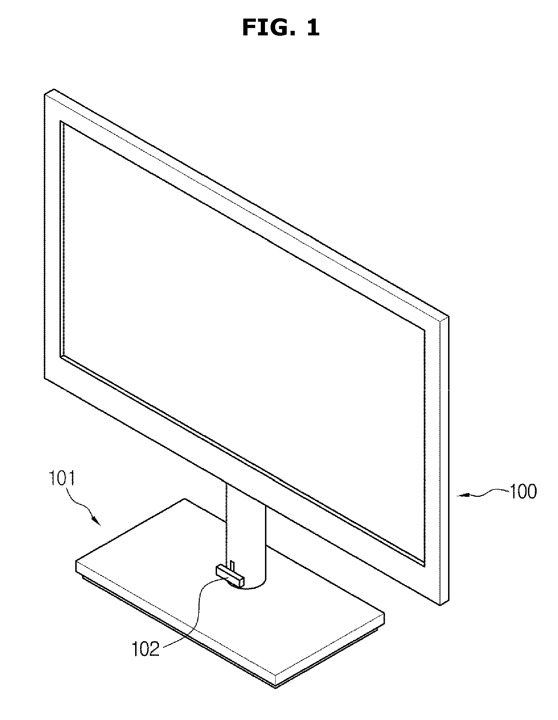

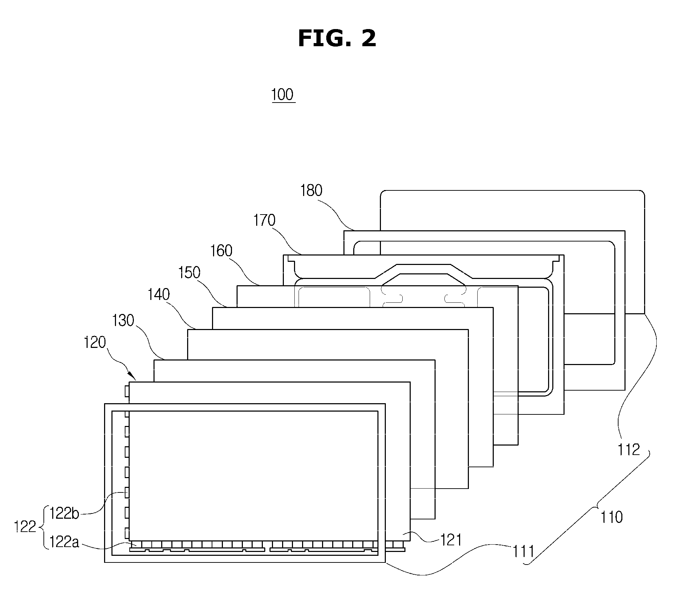

FIG. 1 is a perspective view illustrating an external appearance of a three-dimensional (3D) display apparatus in accordance with an exemplary embodiment and FIG. 2 is a view illustrating the configuration of the 3D display apparatus in accordance with an exemplary embodiment.

As shown in FIG. 1, a 3D display apparatus in accordance with an exemplary embodiment includes a main body 100 displaying an image and outputting sound, a stand 101 mounted at the lower end of the main body 100 and supporting the main body 100 in the upward direction, and a multimedia module 102 mounted on the stand 101, acquiring an image and sound, and transmitting the acquired image and sound to the main body 100. Here, the sound may be output through a device provided at the exterior of the 3D display apparatus.

Such a display apparatus includes a television (TV) or a monitor.

As shown in FIG. 2, the main body 100 includes a case 110, a display panel 120, a support member 130, an optical sheet 140, a backlight device 150, a chassis 160, and a reinforcing member 170.

The case 110 includes a bezel 111 and a cover 112.

The bezel 111 and the cover 112 are detachably attached to each other and, when the bezel 111 and the cover 112 are attached, an encasing space is formed in the bezel 111 and the cover 112.

That is, the display panel 120, the support member 130, the optical sheet 140, the backlight device 150, the chassis 160, and the reinforcing member 170 are encased in the case 110, and the case 110 protects the display panel 120, the support member 130, the optical sheet 140, the backlight device 150, the chassis 160, and the reinforcing member 170, encased therein.

The display panel 120 includes a liquid crystal panel 121 and a driving module 122.

In addition, a glass (not shown) and a filter (not shown) to protect the display panel 120 from external impact are provided at one side of the display panel 120.

Here, the glass prevents the filter from being damaged by external impact, and the filter may include an optical characteristic film, an electromagnetic interference (EMI) shielding film, and an infrared light shielding film.

The optical characteristic film lowers brightness of red light (R) and green light (G) among light incident upon the display panel 120 and raises brightness of blue light (B) and thus enhances optical characteristics. The EMI shielding film shields electromagnetic waves and thus prevents electromagnetic waves incident upon the display panel 120 from being discharged to the outside.

Further, the infrared light shielding film shields infrared light emitted from the display panel 120 and thus prevents a reference level or more of infrared light from being discharged to the outside so that signals transmitted using infrared light, such as a remote controller, may be normally transmitted.

The liquid crystal panel 121 includes a pair of substrates and liquid crystals injected into a gap between the pair of substrates.

One of the pair of substrates includes a plurality of thin film transistors (hereinafter, referred to as "TFT") arranged in a matrix and the other of the pair of substrates includes a common electrode formed of indium tin oxide (ITO).

The driving module 122 includes first driving units 122a driving X electrodes and second driving units 122b driving Y electrodes.

Here, the X electrodes are source electrodes and the Y electrodes are gate electrodes.

The first driving units 122a and the second driving units 122b transmitting driving signals to data lines and gate lines are connected to a control module.

The first driving units 122a select gray-scale voltages according to data lines based on image data and transmit the selected gray-scale voltages to the liquid crystals through the data lines.

The second driving units 122b transmit on/off signals based on the image data to switching elements, i.e., the TFTs, through scan lines and thus turn the TFTs on/off.

That is, when the first driving units 122a supply voltages corresponding to respective color values, the second driving units 122b serve to receive the voltages and provide the voltages to corresponding pixels.

The source electrodes of the TFTs are connected to the data lines, the gate electrodes are connected to the scan lines, and drain electrodes of the TFTs are connected to pixel electrodes of ITO. When a scan signal is supplied to the scan lines, the TFTs are turned on and supply data signals supplied from the data lines to the pixel electrodes.

Designated voltage is applied to the common electrode and thus, an electric field is formed between the common electrode and the pixel electrodes. The orientation angle of the liquid crystals between the substrates of the liquid crystal panel 121 is changed by the electric field and light transmittance is changed by the changed orientation angle, thus displaying a desired image.

The display panel 120 may provide a 3D image to a user. Specifically, the display panel 120 may display a left eye image recognized by a user's left eye and a right eye image recognized by a user's right eye. Here, the left eye image and the right eye image may mean different images related to each other. When the user recognizes the left eye image and the right eye image through the left and right eyes, respectively, the brain of the user may recognize a 3D image having 3D effects though fusion of the planar images of the right and left eye images.

The support member 130 supports the display panel 120 disposed between the support member 130 and the bezel 111 and supports the optical sheet 140 and the backlight device 150 disposed between the support member 130 and the cover 112.

The optical sheet 140 enhances brightness of light supplied from the backlight device 150 and then supplies the light to the display panel 120. That is, the optical sheet 140 increases the strength of light from light emitting diodes of the backlight device 150 and uniformly maintains brightness at the overall surface of the backlight device 150.

The chassis 160 is a board connecting various components required to display an image and to output sound, and various modules and speakers are mounted on the chassis 160.

The reinforcing member 170 is disposed between the bezel 111 and the cover 112 and eliminates joints between the bezel 111 and the cover 112. The reinforcing member 170 is formed of reinforced plastic.

The backlight device 150 supplies light to the display panel 120. Particularly, a plurality of patterns controlling light may be formed on the backlight device 150 so that the display panel 120 may display a 3D image.

Hereinafter, methods of forming patterns of the backlight device 150 in accordance with an exemplary embodiment will be described.

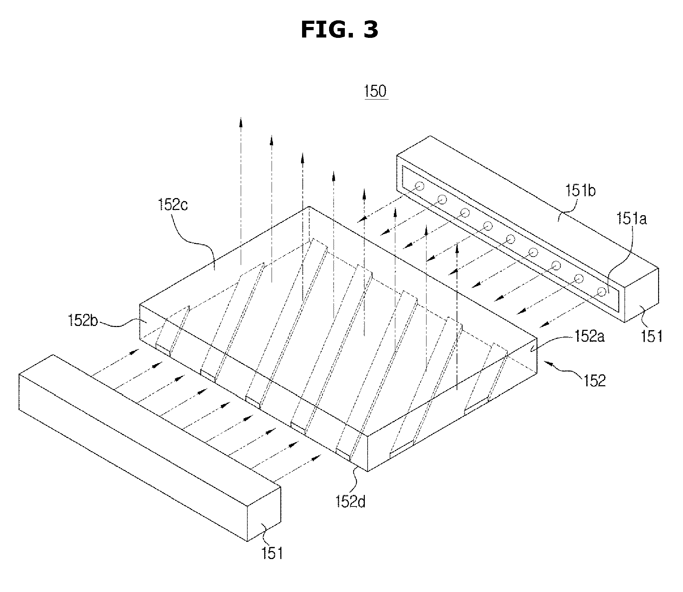

FIG. 3 is a view illustrating a configuration and operation of the backlight device 150 in accordance with an exemplary embodiment.

The backlight device 150 in accordance with an exemplary embodiment includes light sources 151 generating light and a light guide plate 152 changing a path of the generated light and emitting the light to the display panel.

The light source 151 may include a plurality of light emitting diodes (LEDs) 151a generating light and an LED cover 151b covering the light emitting diodes 151a.

The light emitting diodes 151a may be arranged in one direction. The LED cover 151b may have a structure of covering the light emitting diodes 151a and having one open side. The LED cover 151b may reflect light generated by the LEDs 151a through the open side thereof. Consequently, the light generated by the LEDs 151a may be transmitted to the light guide plate 152 through the open side of the LED cover 151 b.

The light guide plate 152 may be formed in a rectangular plate shape. The light guide plate 152 may include a first incident surface 152a and a second incident surface 152b upon which light from the light source 151 is incident, an exit surface 152c connecting the first incident surface 152a and the second incident surface 152b and emitting light therethrough, a reflective surface 152d connecting the first incident surface 152a and the second incident surface 152b and positioned opposite to the exit surface 152c, and a plurality of main patterns 152e separated from each other at uniform intervals and formed on the reflective surface 152d so as to scatter incident light.

Each of the first incident surface 152a and the second incident surface 152b may be defined as one of the side surfaces of the light guide plate 152. The first incident surface 152a and the second incident surface 152b may be provided adjacent to the light sources 151 and thus, light emitted from the light sources 151 may be incident upon the first incident surface 152a and the second incident surface 152b.

The exemplary embodiment shown above discloses the light guide plate 152 including first and second incident surfaces 152a, 152b. However, the exemplary embodiment is not limited thereto. That is, the light guide plate 152 may include one incident surface or three or more incident surfaces.

The incident light may be totally reflected by the reflective surface 152d and the exit surface 152c. Therefore, light may travel away from the incident surfaces 152a, 152b of the light, i.e., toward the center of the light guide plate 152.

The plurality of main patterns 152e may be formed on the reflective surface 152d. The main patterns 152e may scatter light incident from the light sources 151 or light internally reflected by the light guide plate 152.

The main patterns 152e may be separated at a uniform interval. Light scattered by the main patterns 152e may be emitted to the display panel 120 through the light exit surface 152c. Consequently, the display panel 120 may display a left eye image and a right eye image and a user may recognize a 3D image through the left and right eye images. Therefore, each of the main patterns 152e may function as an opening of a parallax barrier.

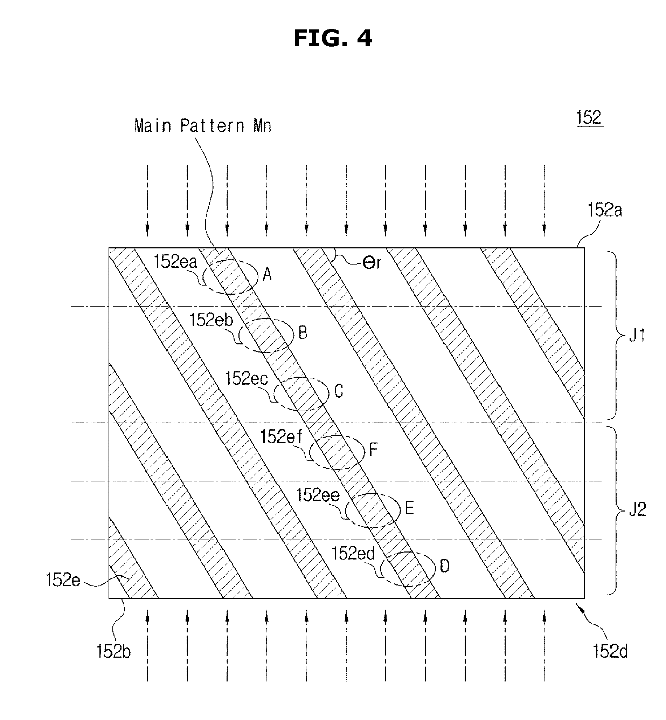

The main patterns 152e may be inclined at a predetermined angle θr from the incident surfaces 152a and 152b. θr may be determined in the range of 0° to 90°. FIG. 3 exemplarily illustrates the case that θr is 45° or more, and such an angle θr may be illustrated in FIG. 4.

In order to generate a 3D image through the display panel 120, the main patterns 152e may be separated at uniform intervals. Because light is emitted only from positions where the main patterns 152e are formed, the display panel 120 may display an image generating binocular disparity.

However, when the main patterns 152e are formed in such a structure, brightness of light emitted from the exit surface 152c of the light guide plate 152 may decrease as the distance between an exiting point of the exit surface 152c and the first incident surface 152a or the second incident surface 152b increases. Light incident upon the light guide plate 152 proceeds from the first incident surface 152a or the second incident surface 152b to the center of the light guide plate 152 and thus, a probability that the light is scattered by the main pattern 152e formed closely to the first incident surface 152a or the second incident surface 152b is higher than a probability that the light is scattered by the main pattern 152e formed at the center of the light guide plate 152. Therefore, as the exit surface 152c is close to the first incident surface 152a or the second incident surface 152b, the amount of light emitted from the exit surface 152c may increase and consequently, the amount of light reaching the center of the exit surface 152c is greatly reduced.

In order to solve such a problem, each of the main patterns 152e may be discontinuously formed. Discontinuous formation of the main patterns 152e means that the density of the main patterns 152e formed in a designated region may be adjusted and thereby, the amount of light reaching the center of the exit surface 152c may be increased. Here, the density may mean the occurrence rate of the main patterns 152e in a designated area of the reflective surface 152d.

FIG. 4 is a plan view of a light guide plate 152 of a backlight device 150 in accordance with an exemplary embodiment.

The exemplary embodiment of FIG. 4 illustrates the case that the light sources 151 are provided on the backlight device 150 so that the angle θr of the main patterns 152e from the incident surfaces is 45° or more.

Because light incident upon the light guide plate 152 is scattered by the main patterns 152e, the scattering degree of light may be adjusted by adjusting the density of the main patterns 152e. That is, the density of the main patterns 152e may be varied based on the distances from the incident surface to a respective main pattern of the main patterns 152e.

As shown in the exemplary embodiment of FIG. 4, if the first incident surface 152a and the second incident surface 152b are provided on the light guide plate 152, the density of the main patterns 152e may be varied based on a distance between the respective main pattern 152e and a closer incident surface (i.e., one of the first incident surface 152a and the second incident surface 152b). Similarly, if a plurality of incident surfaces is provided on the light guide plate 152, the density of the main patterns 152e may be varied based on a distance between the main patterns 152e and the closest incident surface amongst the incident surfaces.

Therefore, parts of the main patterns 152e belonging to a region J1 may be based on the distance from the first incident surface 152a and parts of the main patterns 152e belonging to a region J2 may be based on the distance from the second incident surface 152b.

In FIG. 4, a part of the main pattern Mn belonging to the region J1 may be classified into three sub-pattern groups based on the distance from the first incident surface 152a. The part of the main pattern Mn belonging to the region J1 may be classified into a sub-pattern group A 152ea closest to the first incident surface 152a, a sub-pattern group B 152eb located at the middle distance from the first incident surface 152a, and a sub-pattern group C 152ec the most distant from the first incident surface 152a. Here, the main pattern Mn may mean an arbitrary main pattern among the plurality of main patterns 152e.

In the same manner, a part of the main pattern Mn belonging to the region J2 may be classified into three sub-pattern groups based on the distance from the second incident surface 152b. The part of the main pattern Mn belonging to the region J2 may be classified into a sub-pattern group D 152ed closest to the second incident surface 152b, a sub-pattern group E 152ee located at the middle distance from the second incident surface 152b, and a sub-pattern group F 152ef the most distant from the second incident surface 152b.

When the main pattern Mn is classified into the sub-pattern groups A∼F, the respective sub-pattern groups A∼F may be different. Particularly, the respective sub-pattern groups A∼F may have different scattering densities.

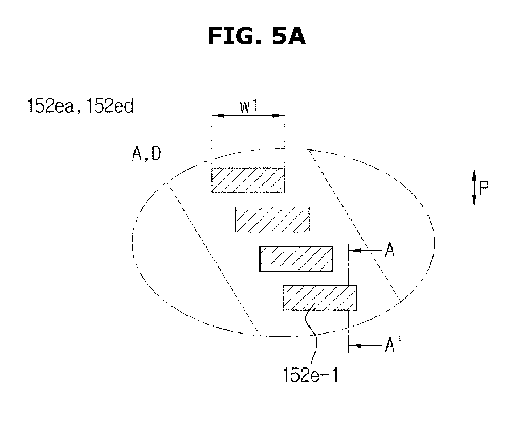

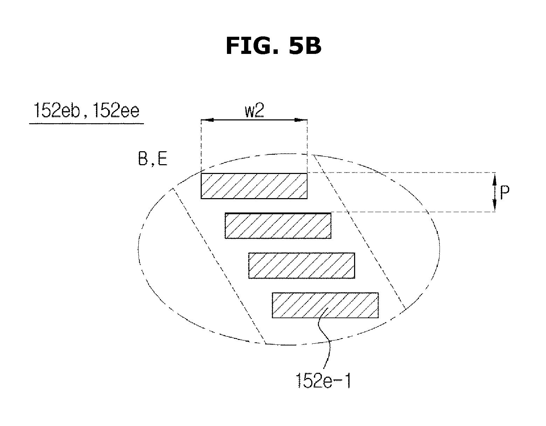

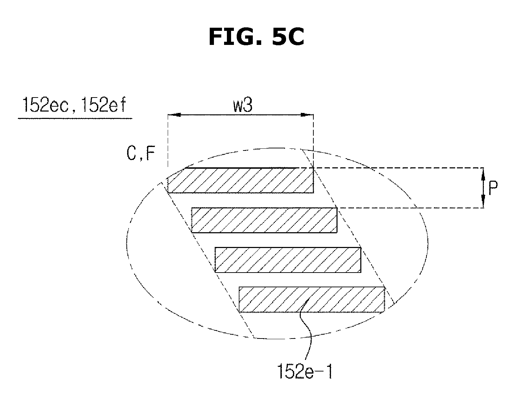

FIGS. 5A to 5C are views illustrating a method of forming main patterns 152e in a backlight device 150 in accordance with an exemplary embodiment. FIG. 5A is an enlarged view illustrating a sub-pattern group A or D 152ea or 152ed provided at a distance closest to a light incident surface in accordance with an exemplary embodiment, FIG. 5B is an enlarged view illustrating a sub-pattern group B or E 152eb or 152ee provided at a medium distance to a light incident surface in accordance with an exemplary embodiment, and FIG. 5C is an enlarged view illustrating a sub-pattern group 152 C or F 152ec or 152ef provided at a distance farthest to a light incident surface in accordance with an exemplary embodiment. That is, the a sub-pattern group B or E 152eb or 152ee are provided between the sub-pattern group A or D 152ea or 152ed and the sub-pattern group 152 C or F 152ec or 152ef, respectively.

With reference to FIGS. 5A to 5C, each of the sub-pattern groups may include a plurality of sub-patterns 152e-1. The sub-patterns 152e-1 may be separated from each other at uniform intervals. Each of the sub-patterns 152e-1 may be formed in a direction of extending the first incident surface 152a or the second incident surface 152b.

The scattering density of the sub-pattern group may be determined by the width of the sub-patterns 152e-1 belonging to the corresponding sub-pattern group.

As shown in the exemplary embodiment of FIG. 5A, the width of each of the sub-patterns 152e-1 belonging to the sub-pattern groups A and D 152ea and 152ed may be w1. On the other hand, as shown in the exemplary embodiment in FIG. 5B, the width of each of the sub-patterns 152e-1 belonging to the sub-pattern groups B and E 152eb and 152ee may be w2, which is greater than w1. Further, as shown in the exemplary embodiment of FIG. 5C, the width of each of the sub-patterns 152e-1 belonging to the sub-pattern groups C and F 152ec and 152ef may be the greatest, i.e., w3.

In such a manner, as the distance of the sub-pattern group from the incident surface serving as the basis (i.e., the reference point) increases, the width of the sub-patterns 152e-1 belonging to the corresponding sub-pattern group may increase. When the width of the sub-patterns 152e-1 increases, the scattering density of the sub-pattern group may increase. Consequently, a probability that light incident upon the light guide plate 152 reaches the center of the light guide plate 152 may increase.

With reference to FIGS. 5A to 5C, when the sub-pattern group is varied, the width of the sub-patterns 152e-1 belonging to the corresponding sub-pattern group is varied but the separation interval (p) between the sub-patterns 152e-1 may be equal.

Differently, when the sub-pattern group is varied, the separation interval (p) between the sub-patterns 152e-1 belonging to the corresponding sub-pattern group may be varied while maintaining the same width of the sub-patterns 152e-1.

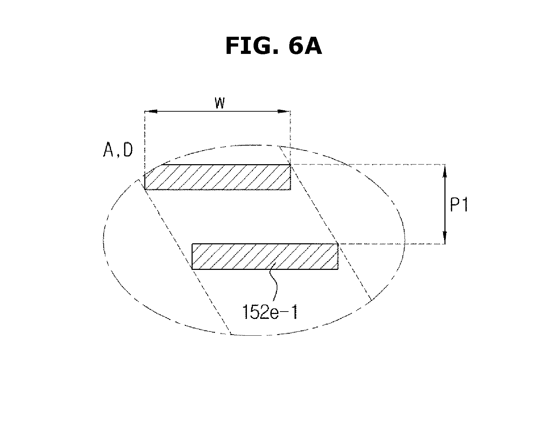

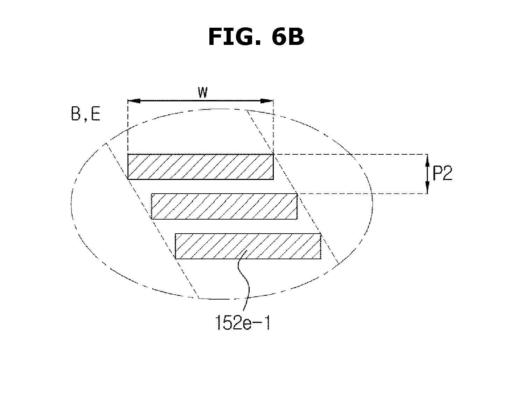

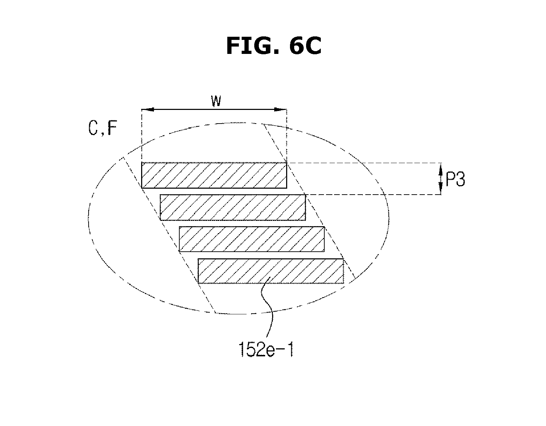

FIGS. 6A to 6C are views illustrating a method of forming main patterns 152e in a backlight device 150 in accordance with an exemplary embodiment. FIG. 6A is an enlarged view illustrating a sub-pattern group A or D 152ea or 152ed provided at a distance closest to a light incident surface in accordance with an exemplary embodiment, FIG. 6B is an enlarged view illustrating a sub-pattern group B or E 152eb or 152ee provided at a medium distance to a light incident surface in accordance with an exemplary embodiment, and FIG. 6C is an enlarged view illustrating a sub-pattern group 152 C or F 152ec or 152ef provided at a distance farthest to a light incident surface in accordance with an exemplary embodiment. That is, the a sub-pattern group B or E 152eb or 152ee are provided between the sub-pattern group A or D 152ea or 152ed and the sub-pattern group 152 C or F 152ec or 152ef, respectively.

With reference to FIG. 6A, a plurality of sub-patterns 152e-1 belonging to the sub-pattern group A or D 152ea or 152ed may be separated from each other at an interval p1. On the other hand, as shown in the exemplary embodiment in FIG. 6B, a plurality of sub-patterns 152e-1 belonging to the sub-pattern group B or E 152eb or 152ee may be separated from each other at an interval p2. The interval p2 may be smaller than the interval p1. Further, as shown in the exemplary embodiment in FIG. 6C, a plurality of sub-patterns 152e-1 belonging to the sub-pattern group C or F 152ec or 152ef may be separated from each other at an interval p3. The interval p3 may be smaller than the interval p2.

In such a manner, as the distance of the sub-pattern group from the incident surface serving as the basis (i.e., the reference point) decreases, the interval between the sub-patterns 152e-1 belonging to the corresponding sub-pattern group may increase. When the interval between the sub-patterns 152e-1 increases, the scattering density of the corresponding sub-pattern group may decrease. Consequently, a probability that light incident upon the light guide plate 152 reaches the center of the light guide plate 152 may increase.

Although the intervals p1, p2, p3 between the sub-patterns 152e-1 belonging to the respective sub-pattern groups are different, the widths (w) of the respective sub-patterns 152e-1 may be uniform.

Differently, the intervals between the sub-patterns 152e-1 belonging to the respective sub-pattern groups may be different and the widths of the respective sub-patterns 152e-1 belonging to the respective sub-pattern groups may be different. That is, the exemplary embodiments disclosed in FIGS. 5A to 5C and the exemplary embodiments disclosed in FIGS. 6A to 6C may be combined.

Further, each of the sub-patterns 152e-1 may be discontinuously formed. In this case, the widths of the respective sub-patterns 152e-1 may be different. Further, the intervals between the sub-patterns 152e-1 belonging to the respective sub-pattern groups may be different. Besides, the two embodiments may be combined.

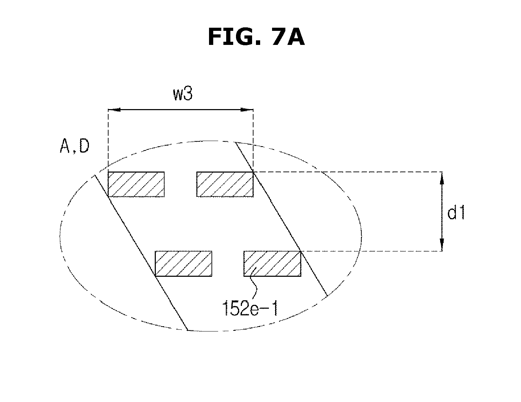

Hereinafter, a method of varying widths of respective sub-patterns 152e-1 which are discontinuously formed will be described with reference to FIGS. 7A to 7C.

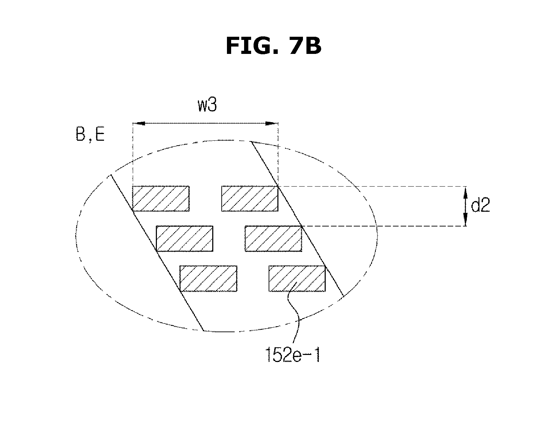

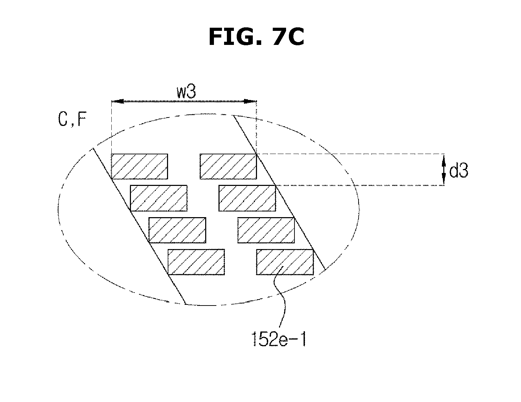

FIGS. 7A to 7C are views illustrating a method of forming main patterns 152e in a backlight device 150 in accordance with an exemplary embodiment. FIG. 7A is an enlarged view illustrating a sub-pattern group A or D 152ea or 152ed provided at a distance closest to a light incident surface in accordance with an exemplary embodiment, FIG. 7B is an enlarged view illustrating a sub-pattern group B or E 152eb or 152ee provided at a medium distance to a light incident surface in accordance with an exemplary embodiment, and FIG. 7C is an enlarged view illustrating a sub-pattern group 152 C or F 152ec or 152ef provided at a distance farthest to a light incident surface in accordance with an exemplary embodiment. That is, the a sub-pattern group B or E 152eb or 152ee are provided between the sub-pattern group A or D 152ea or 152ed and the sub-pattern group 152 C or F 152ec or 152ef, respectively.

With reference to FIG. 7A, a plurality of sub-patterns 152e-1 belonging to the sub-pattern group A or D 152ea or 152ed and discontinuously or intermittently formed may be separated from each other at intervals d1. On the other hand, as shown in the exemplary embodiment of FIG. 7B, a plurality of sub-patterns 152e-1 belonging to the sub-pattern group B or E 152eb or 152ee and discontinuously or intermittently formed may be separated from each other at an interval d2. The interval d1 may be smaller than the interval d2. Further, as shown in the exemplary embodiment of FIG. 7C, a plurality of sub-patterns 152e-1 belonging to the sub-pattern group C or F 152ec or 152ef and discontinuously or intermittently formed may be separated from each other at an interval d2. Here, the interval d3 may be larger than the intervals d1 and d2.

In such a manner, although the sub-patterns 152e-1 are discontinuously or intermittently formed, the scattering density of the sub-pattern groups may be controlled using the same method as in the case that the sub-patterns 152e-1 are continuously formed as shown in FIGS. 5A - 6C. Thereby, brightness at the center of the light guide plate 152 with respect to the light incident surfaces 152a and 152b may be increased.

Heretofore, exemplary embodiments where the light sources 151 are provided on the backlight device 150 so that the angle θr of the main patterns 152e from the incident surface is 45° or more has been described. Hereinafter, exemplary embodiments where the light sources 151 are provided on the backlight device 150 and the angle θr of the main patterns 152e from the incident surface is less than 45° will be described.

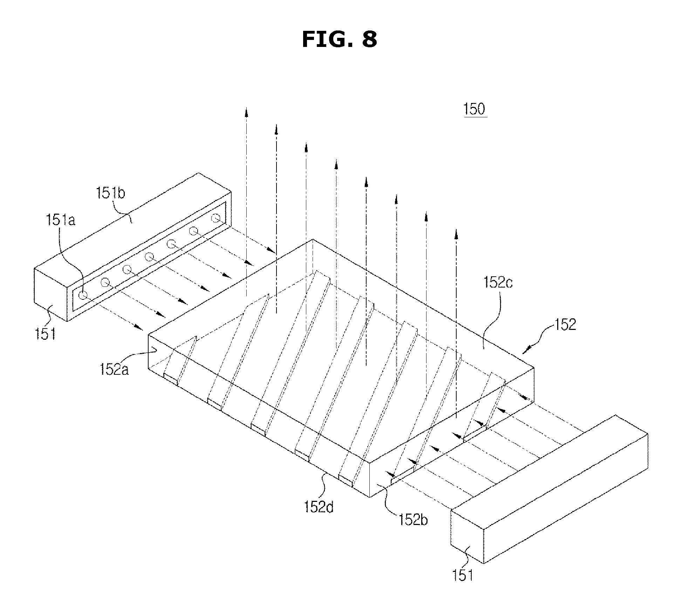

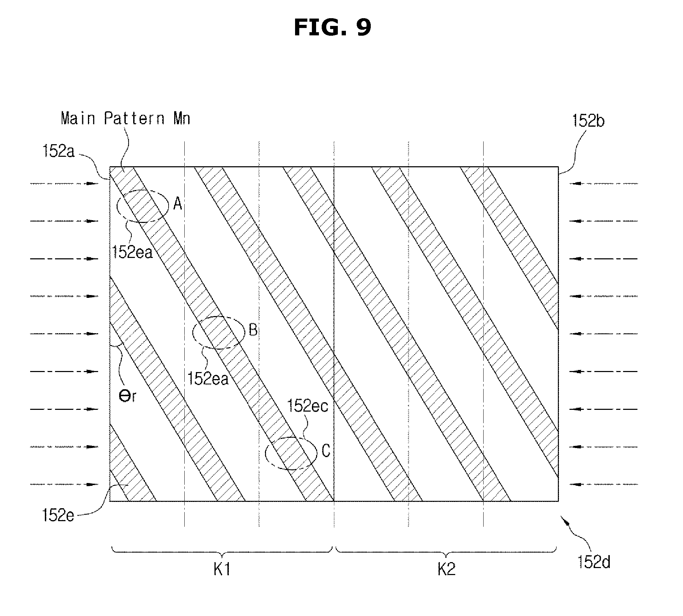

FIG. 8 is a view illustrating a configuration and operation of a backlight device 150 in accordance with an exemplary embodiment and FIG. 9 is a plan view of a light guide plate 152 of a backlight device 150 in accordance with an exemplary embodiment.

As alternatives to the exemplary embodiments shown in FIGS. 3 and 4, exemplary embodiments shown in FIGS. 8 and 9 illustrate the exemplary embodiments where the light sources 151 are provided on the backlight device 150 and the angle θr of the main patterns 152e with respect to the incident surface is less than 45°.

Similar to the exemplary embodiment shown in FIGS. 3 and 4, in FIGS. 8 and 9, for example, if a first incident surface 152a and a second incident surface 152b are provided on the light guide plate 152, the density of main patterns 152e may be varied based on a distance between the main patterns 152e and a closer incident surface (i.e., one of the first incident surface 152a and the second incident surface 152b). Similarly, if a plurality of incident surfaces is provided on the light guide plate 152, the density of the main patterns 152e may be varied based on a distance between the main patterns 152e and the closest incident surface amongst the incident surfaces.

Therefore, parts of the main patterns 152e belonging to a region K1 may be based on the distance from the first incident surface 152a to the main patterns 152e and parts of the main patterns 152e belonging to a region K2 may be based on the distance from the second incident surface 152b to the main patterns 152e.

In FIGS. 8 and 9, a part of the main pattern Mn belonging to the region K1 may be classified into three sub-pattern groups based on the distance from the first incident surface 152a from respective sub-pattern group. In detail, the part of the main pattern Mn belonging to the region K1 may be classified into a sub-pattern group A 152ea located at a closest distance to the first incident surface 152a, a sub-pattern group B 152eb located at a medium distance from the first incident surface 152a, and a sub-pattern group C 152ec located at a farthest distance from the first incident surface 152a. That is, sub-pattern group B 152eb is located between the sub-pattern group A 152ea and the sub-pattern group C 152ec. Here, the main pattern Mn may mean an arbitrary main pattern among the plurality of main patterns 152e.

When the main pattern Mn is classified into the sub-pattern groups A∼C 152ea, 152eb, and 152ec, the respective sub-pattern groups A∼C 152ea, 152eb, and 152ec may be different. Particularly, the respective sub-pattern groups A∼C 152ea, 152eb, and 152ec may have different densities.

Further, similar to the exemplary embodiment shown in FIGS. 4 and 5A-5C, each of the sub-pattern groups A∼C 152ea, 152eb, and 152ec may include a plurality of sub-patterns 152e-1. The sub-patterns 152e-1 may be separated from each other at uniform intervals. Each of the sub-patterns 152e-1 may be formed in a direction of extending the first incident surface 152a or the second incident surface 152b.

The density of the sub-pattern group may be varied by changing the width of the sub-patterns 152e-1 belonging to the corresponding sub-pattern group.

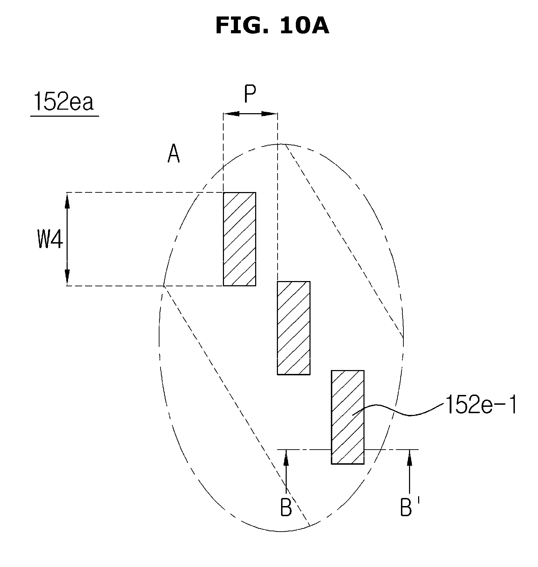

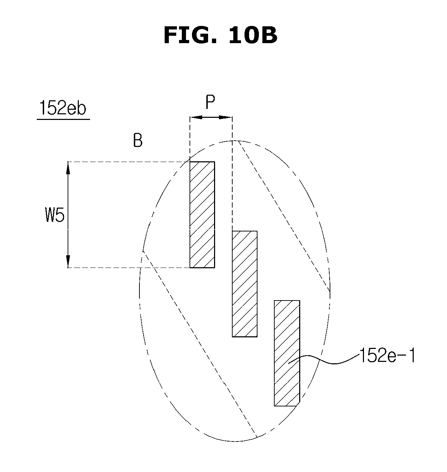

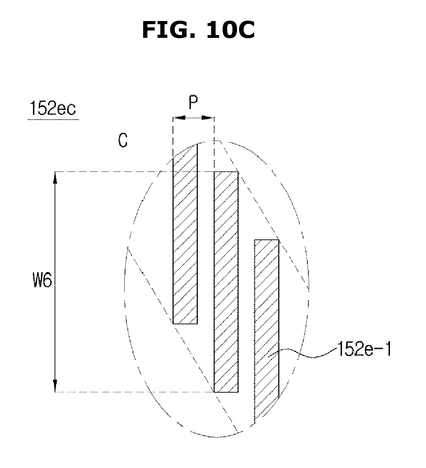

FIGS. 10A to 10C are views illustrating a method of forming the main patterns 152e in a backlight device 150 in accordance with an exemplary embodiment. FIG. 10A is an enlarged view illustrating a sub-pattern group A 152ea, FIG. 10B is an enlarged view illustrating a sub-pattern group B 152eb, and FIG. 10C is an enlarged view illustrating a sub-pattern group C 152ec.

As shown in FIG. 10A, the width of each of the sub-patterns 152e-1 belonging to the sub-pattern group A 152ea may be w4. On the other hand, as shown in FIG. 10B, the width of each of the sub-patterns 152e-1 belonging to the sub-pattern group B 152eb may be w5, which is greater than w4. Further, as shown in FIG. 10C, the width of each of the sub-patterns 152e-1 belonging to the sub-pattern group C 152ec may be w6, which is greater than w5.

Although the positions of the light sources 151 are changed, the first incident surface 152a is determined by the position of the light sources 151 with respect to the light guide plate 152. Therefore, when the sub-patterns 152e-1 are formed in a direction of extending the first incident surface 152a, the width of the sub-patterns 152e-1 may be adjusted using the same method as in FIGS. 5A to 5C. Consequently, a probability that light incident upon the light guide plate 152 reaches the center of the light guide plate 152 may increase.

With reference to FIGS. 10A to 10C, when the sub-pattern group is varied, the width of the sub-patterns 152e-1 belonging to the corresponding sub-pattern group is varied but the separation interval (p) between the sub-patterns 152e-1 may be equal.

Alternatively, when the sub-pattern group is varied, the separation interval (p) between the sub-patterns 152e-1 belonging to the corresponding sub-pattern group may be varied while maintaining the same width of the sub-patterns 152e-1.

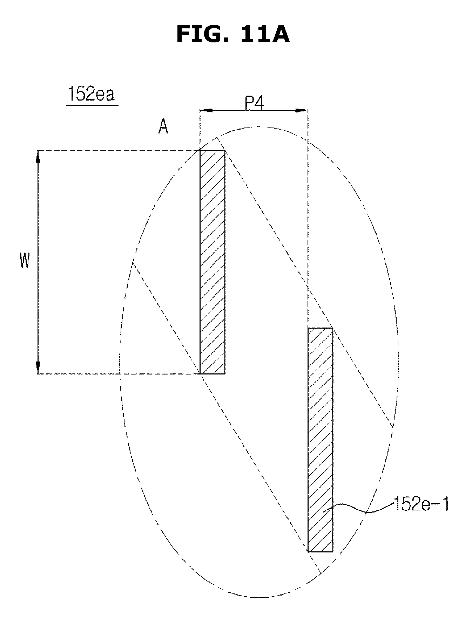

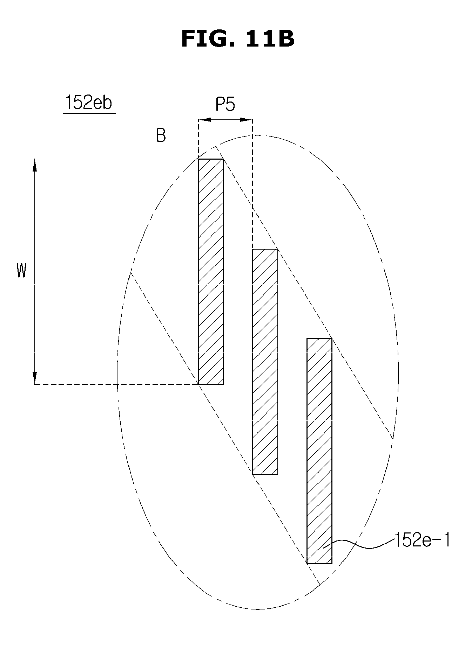

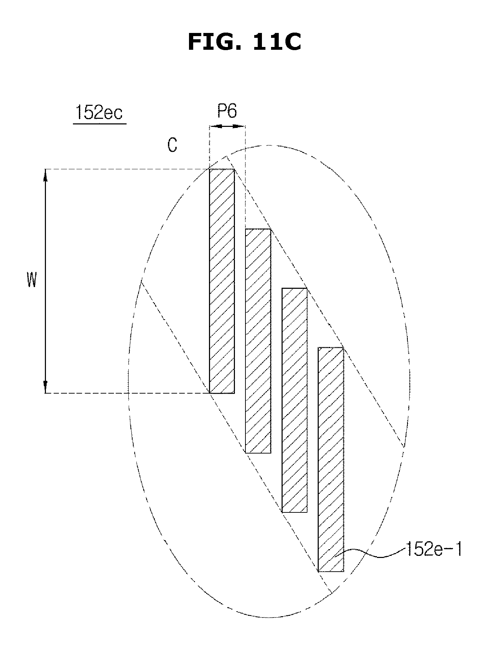

FIGS. 11A to 11C are views illustrating a method of forming the main patterns 152e in a backlight device 150 in accordance with an exemplary embodiment. FIG. 11A is an enlarged view illustrating a sub-pattern group A 152ea, FIG. 11 B is an enlarged view illustrating a sub-pattern group B 152eb, and FIG. 11C is an enlarged view illustrating a sub-pattern group C 152ec.

With reference to FIG. 11A, a plurality of sub-patterns 152e-1 belonging to the sub-pattern group A 152ea may be separated from each other at an interval p4. On the other hand, as exemplarily shown in FIG. 11B, a plurality of sub-patterns 152e-1 belonging to the sub-pattern group B 152eb may be separated from each other at an interval p5. The interval p5 may be smaller than the interval p4. Further, as shown in FIG. 11C, a plurality of sub-patterns 152e-1 belonging to the sub-pattern group C 152ec may be separated from each other at an interval p6. The interval p6 may be smaller than the interval p5.

Although the positions of the light sources 151 are changed, the first incident surface 152a is determined by the position of the light sources 151 with respect to the light guide plate 152. Therefore, when the sub-patterns 152e-1 are formed in a direction of extending the first incident surface 152a, the interval between the sub-patterns 152e-1 may be adjusted using the same method as in FIGS. 6A to 6C. Consequently, brightness at the center of the light guide plate 152 may be increased.

Although the intervals between the sub-patterns 152e-1 belonging to the respective sub-pattern groups are different, the widths (w) of the respective sub-patterns 152e-1 may be uniform.

Alternatively, the widths of the respective sub-patterns 152e-1 belonging to the respective sub-pattern groups may be different while the intervals between the sub-patterns 152e-1 belonging to the respective sub-pattern groups are also different. That is, as the positions of the light sources 151 with respect to the light guide plate 152 are changed, the above-described exemplary embodiments may be combined.

Further, each of the sub-patterns 152e-1 may be discontinuously or intermittently formed. As each of the sub-patterns 152e-1 is discontinuously or intermittently formed, the widths of the respective sub-patterns 152e-1 may also be different. Further, the intervals between the sub-patterns 152e-1 belonging to the respective sub-pattern groups may be different. In addition, only the two separate exemplary embodiments of the three (3) different embodiments described may be combined.

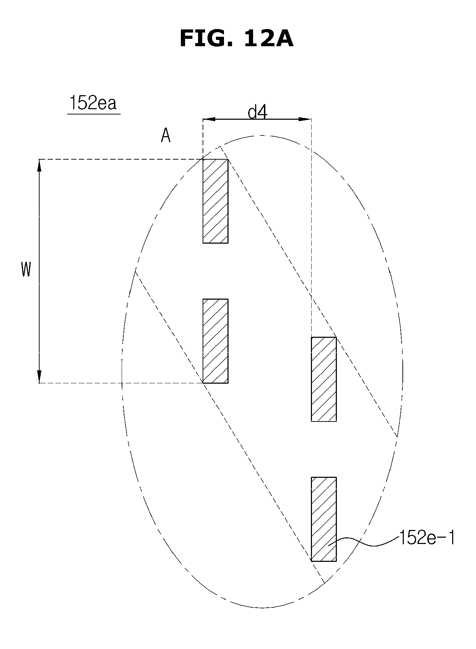

Hereinafter, a method of varying the widths of respective sub-patterns 152e-1 which are discontinuously or intermittently formed will be described with reference to FIGS. 12A to 12C.

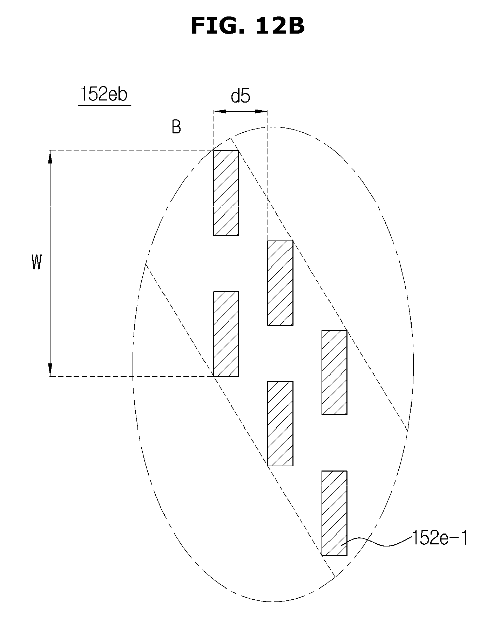

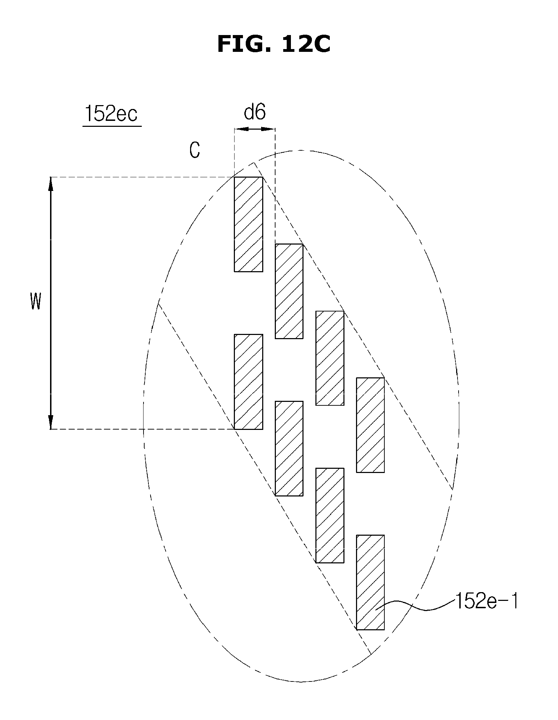

FIGS. 12A to 12C are views illustrating a method of forming main patterns 152e in a backlight device 150 in accordance with an exemplary embodiment. FIG. 12A is an enlarged view illustrating a sub-pattern group A 152ea, FIG. 12B is an enlarged view illustrating a sub-pattern group B 152eb, and FIG. 12C is an enlarged view illustrating a sub-pattern group C 152ec.

With reference to FIG. 12A, a plurality of sub-patterns 152e-1 belonging to the sub-pattern group A 152ea and discontinuously or intermittently formed may be separated from each other at an interval d4. On the other hand, as shown in FIG. 12B, a plurality of sub-patterns 152e-1 belonging to the sub-pattern group B 152eb and discontinuously or intermittently formed may be separated from each other at an interval d5. The interval d5 may be smaller than the interval d4. Further, as shown in FIG. 12C, a plurality of sub-patterns 152e-1 belonging to the sub-pattern group C 152ec and discontinuously or intermittently formed may be separated from each other at an interval d6. The interval d6 may be smaller than the interval d5.

As the positions of the light sources 151 are changed, the sub-patterns 152e-1 may be discontinuously or intermittently formed. In this case, the density of the sub-pattern groups may be controlled using the same method as in the case that the sub-patterns 152e-1 are continuously formed as shown in FIGS. 10A-11C. Thereby, brightness at the center of the light guide plate 152 may be increased.

Heretofore, formation methods of the main patterns 152e have been described. Hereinafter, different types of each of the plurality of sub-patterns 152e-1 forming the main patterns 152e will be described.

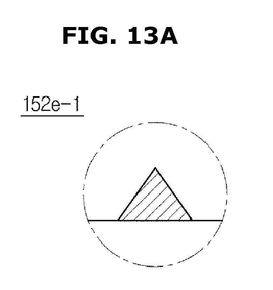

FIGS. 13A to 13C are sectional views of various sub-patterns of a backlight device 150 in accordance with an exemplary embodiment. FIGS. 13A to 13C are sectional views of the sub-patterns of FIG. 5A, taken along the line A-A', or sectional views of the sub-patterns of FIG. 10A, taken along the line B-B'. However, the sub-patterns are only examples for convenience of description and each of a plurality of sub-patterns in accordance with other exemplary embodiments may be implemented in the same manner as or in the similar manner to FIGS. 13A to 13C.

The sub-patterns 152e-1 directly scatter light and may thus be formed in various shapes capable of directly scattering light.

For example, the sub-pattern 152e-1 may be a triangular prism pattern, as shown in FIG. 13A. Here, the triangular prism pattern may be a pattern having a triangular sectional shape. Brightness and straightness of emitted light may be determined according to the inclination angle of the triangular sectional shape of the sub-pattern 152e-1.

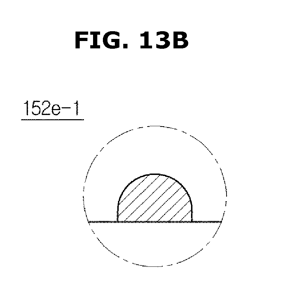

Alternatively, the sub-pattern 152e-1 may be a lenticular pattern, as exemplarily shown in FIG. 13B. Here, the lenticular pattern may be a pattern having a semi-circular or semi-elliptical sectional shape.

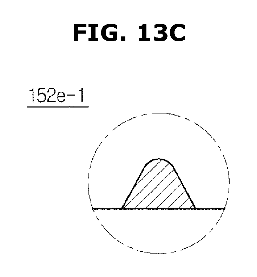

Further, the sub-pattern 152e-1 may be a curvilinear prism pattern, as shown in FIG. 13C. Here, the curvilinear prism pattern may be a pattern having a triangular a section and the upper vertex of which is arc-shaped.

The section of the curvilinear prism pattern or the lenticular pattern has a curved surface and thus, the reflecting direction of light may be changed according to a position of the sub-pattern 152e-1 upon which light is incident. Therefore, light may be scattered over a wide region.

FIGS. 13A to 13C illustrate exemplary embodiments of the sub-patterns 152e-1 and thus, the patterns of the sub-patterns 152e-1 are not limited thereto. Further, various exemplary embodiments of the sub-patterns 152e-1 may be applied to the light guide plates 152 in accordance with the above-described exemplary embodiments.

The backlight device 150 in accordance with the exemplary embodiment of FIG. 3 or 8 may be applied to a 3D display apparatus providing a 3D image to a user.

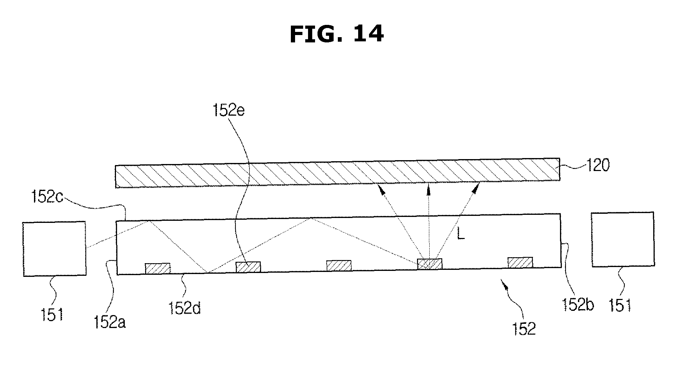

FIG. 14 is a view illustrating a method of providing a 3D image to a user in a 3D display apparatus in accordance with an exemplary embodiment. In FIG. 14, arrows L indicate the proceeding direction of light emitting from light sources 151.

The 3D display apparatus in accordance with an exemplary embodiment shown in FIG. 14 may include a backlight device 150 including light sources 151 generating light and a light guide plate 152 changing the path of the generated light and then emitting the light, and a display panel 120 transmitting the light emitted by the light guide plate 152 and displaying a left eye image recognized by a user's left eye and a right eye image recognized by a user's right eye so that the user may recognize a 3D image.

Here, the backlight device 150 may be implemented in accordance with the exemplary embodiments as shown in FIG. 3 or 8. The configuration of the backlight device 150 has been described above and a detailed description thereof will thus be omitted.

Light generated by the light sources 151 may be incident upon incident surfaces 151a and 151b of the light guide plate 152. FIG. 14 illustrates the exemplary embodiment where the light is incident upon the first incident surface 152a.

Such incident light proceeds within the light guide plate 152 through total reflection as shown in the arrows L. A part of light totally reflected within the light guide plate 152 may proceed to a plurality of main patterns 152e provided on the reflective surface 152d of the light guide plate 152. Because the main patterns 152 may scatter light, as described above, the part of light may be scattered and emitted through the exit surface 152c of the light guide plate 152.

The emitted light may pass through the display panel 120. Light having passed through the display panel 120 reaches the user's eyes so that the user may recognize an image. The light reaching the user's left eye and light reaching the user's right eye may be different. Consequently, an image recognized by the user's left eye and an image recognized by the user's right eye may be different and the user may recognize a 3D image through such a difference.

That is, the main patterns 152e scatter light and thus cause different lights to reach the user's left and right eyes. Consequently, the user recognizes a right eye image through the right eye and recognizes a left eye image through the left eye. Finally, the user may recognize one 3D image having 3D effects through fusion of the left eye image and the right eye image.

Here, the main patterns 152e are discontinuously or intermittently formed, as described above, and thus, brightness at the center of the light guide plate 152 may be increased.

As is apparent from the above description, in a backlight device and a 3D display apparatus having the same in accordance with an exemplary embodiment, patterns are discontinuously or intermittently formed and thus, the density of the patterns formed according to positions may be adjusted.

Thereby, brightness at a region adjacent to the central portion of the backlight device may be higher than brightness at a light entry portion of the backlight device.

While exemplary embodiments have been particularly shown and described above, it would be appreciated by those skilled in the art that various changes may be made therein without departing from the principles and spirit of the inventive concept, as defined in the following claims.

## Claims

1. A backlight device (150) comprising:
a light source (151) configured to generate light; and
a light guide plate (152) configured to change a path of the light and configured to emit the light,
wherein the light guide plate (152) comprises:
an incident surface (152b) upon which the light is incident;
an exit surface (152c) configured to emit the incident light;
a reflective surface (152d) provided opposite to the exit surface (152c); and
a plurality of main patterns (152e) separated at a uniform interval, the plurality of main patterns (152e) provided intermittently on the reflective surface (152d) and configured to scatter the incident light.

2. The backlight (150 device of claim 1 wherein the plurality of main patterns are configured to variably scatter the incident light from the incident surface (152b) to a portion of the light guide plate spaced from the incident surface (152b).

3. The backlight device (150) according to claim 2, wherein the plurality of main patterns are configured to increasingly scatter an amount of the incident light from the incident surface to the portion of the light guide plate spaced from the incident surface.

4. The backlight device (150) according to any preceding claim, wherein the plurality of main patterns (152e) are inclined at a predetermined angle with respect to the incident surface (152b).

5. The backlight device (150) according to any preceding claim, wherein each of the plurality of main patterns comprises a plurality of sub-pattern groups, each sub-pattern group having a different scattering density and wherein the scattering density is determined according to a distance from the incident surface to each sub-pattern group.

6. The backlight device (150) according to claim 5, wherein the plurality of sub-pattern groups of a main pattern of the plurality of main patterns (152e) are continuously connected with one another.

7. The backlight device (150) according to any of claims 5 or 6, wherein each of the plurality of sub-pattern groups comprises a plurality of sub-patterns separated at a uniform interval.

8. The backlight device (150) according to claim 7, wherein the interval of the plurality of sub-patterns varies according to the position of the each sub-pattern group with respect to the incident surface.

9. The backlight device (150) according to claim 8, wherein the interval of the plurality of sub-patterns decreases as a distance between each sub-pattern group and the incident surface increases.

10. The backlight device (150) according to any of claims 7 to 9, wherein the width of the sub-pattern of the plurality of sub-patterns varies according to the position of the each sub-pattern group with respect to the incident surface.

11. The backlight device (150) according to claim 10, wherein the width of the sub-pattern of the plurality of sub-patterns increases as a distance between each sub-pattern group and the incident surface increases.

12. The backlight device (150) according to any of claims 7 to 11, wherein each of the plurality of sub-patterns extends in a parallel direction with an extending direction of the incident surface.

13. The backlight device (150) according to any of claims 7 to 12, wherein each of the plurality of sub-patterns extend in a direction perpendicular to a light emitting direction of the light source.

14. The backlight device (150) according to any of claims 7 to 13, wherein each of the plurality of sub-patterns is intermittently formed.

15. The backlight device (150) according to any of claims 7 to 14, wherein the plurality of sub-patterns comprises at least one of a triangular prism pattern, a curvilinear prism pattern, and a lenticular pattern.

16. The backlight device (150) according to any preceding claim, wherein the light guide plate (152) includes a second incident surface (152a) opposed to the first incident surface (152b), and wherein the plurality of main patterns are configured to variably scatter the incident light from the closest of the first (152b) or second (152a) incident surface and a middle portion of the light guide plate (152).

17. A 3D display apparatus comprising:
a backlight device (150) according to any preceding claim; and
a display panel (110) configured to transmit the light emitted from the light guide plate (152) and configured to display a first image recognized by a first eye of the user and a second image recognized by a second eye of the user.
